Europäisches Patentamt

European Patent Office

Office européen des brevets

(19)

(11) Veröffentlichungsnummer: **0 062 745**
**B1**

(12) **EUROPÄISCHE PATENTSCHRIFT**

(45) Veröffentlichungstag der Patentschrift:
**14.11.84**

(21) Anmeldenummer: **82101255.6**

(22) Anmeldetag: **19.02.82**

(51) Int. Cl.³: **H 02 K 7/06, H 02 K 23/56**

(54) **Antriebsvorrichtung für Linearbewegungen.**

(30) Priorität: **10.04.81 DE 3114591**

(43) Veröffentlichungstag der Anmeldung:
**20.10.82 Patentblatt 82/42**

(45) Bekanntmachung des Hinweises auf die Patenterteilung:
**14.11.84 Patentblatt 84/46**

(84) Benannte Vertragsstaaten:
**AT CH FR GB IT LI NL SE**

(56) Entgegenhaltungen:
**DE - A - 2 650 953**
**DE - A - 2 743 908**
**SU - A - 726 625**

(73) Patentinhaber: **Held, Kurt, Alte Strasse 1,**
**D-7218 Trossingen 2 (DE)**

(72) Erfinder: **Held, Kurt, Alte Strasse 1,**
**D-7218 Trossingen 2 (DE)**

(74) Vertreter: **Ullrich, Thurmod, Dr., c/o Held Alte Strasse 1,**
**D-7218 Trossingen 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft eine Antriebsvorrichtung für Linearbewegungen gemäss dem Oberbegriff des Patentanspruchs.

Zur Durchführung linearer Bewegungsabläufe kann man pneumatisch oder hydraulisch angetriebene Schub- oder Zugaggregate verwenden. Diese Vorrichtungen eignen sich nur in begrenztem Umfang für Anwendungsbereiche bei kleineren Vorrichtungen oder Aggregaten und sind sehr aufwendig, weil entsprechende Druckmittel, nämlich Druckluft oder Druckflüssigkeit zu deren Betätigung zur Verfügung stehen müssen.

Seit einiger Zeit sind Linearantriebe auf dem Markt, bei denen innerhalb eines zylinderförmigen Gehäuses eine Schubstange angeordnet ist, die mit Hilfe eines kleinen Elektromotors über einen Schnecken- oder Kegelradantrieb und eine Gewindestange oder mittels schräg zur Achsrichtung der Schubstange angeordneter Rollenköpfe (vgl. Prospektmaterial der Fa. Magnetic Elektromotoren GmbH in Maulburg) oder in ähnlicher Weise in axialer Richtung vor- und zurückgeschoben werden kann. Man kann auch den Antriebsmotor mit seiner Ankerwelle unmittelbar in axialer Richtung über eine Gewindestange mit einer Schubstange verbinden. Als Antriebe werden die üblicherweise auf dem Markt erhältlichen Kleinmotoren, Gleichstrom-Servo-Motoren u. dgl. verwendet.

So beschreibt die DE-A Nr. 2743908 eine Antriebsanordnung zur Umwandlung einer Rotationsbewegung in eine Linearbewegung, bei der die Welle des Läufers eines Elektromotors als Hohlwelle ausgebildet ist und bei der an der Innenbohrung der Hohlwelle Gänge eines Muttergewindes für eine in der Bohrung in axialer Richtung bewegliche Gewindespindel vorgesehen sind.

Weiterhin ist aus der SU-T Nr. 726625 eine elektrische Antriebsvorrichtung mit einem Elektromotor mit Hohlrotor und einem kugelgelagerten Schraubgetriebe aus einer hülsenartigen Mutter mit Spindel bekannt, wobei die Spindel innerhalb des Rotors verläuft. Es ist des weiteren ein Positionsfühler zur Erhöhung der Lagegenauigkeit und Einstellung vorgesehen. Dabei ist der Positionsfühler mit einem Hohlrotor ausgestattet, der unmittelbar mit der Mutter des vorgenannten Mechanismus verbunden ist.

Diese bekannten Linearantriebe besitzen jedoch wesentliche Nachteile, arbeiten umständlich und mit Verzögerungen, weil die Kraft der Motorwelle über Zahnräder, Rollenköpfe u. dgl. übertragen wird, wodurch die Reibungsverluste vergrössert werden. Rollenköpfe lassen Schlupf zu und eignen sich deshalb nicht zur Darstellung von genau reproduzierbaren Positionierbewegungen mit festem Drehwinkel: Wegverhältnis. Auch besitzen die für den Antrieb verwendeten Elektromotoren ein zu grosses Trägheitsmoment, so dass das Anlaufverhalten ungünstig beeinflusst wird, und auch das Verhältnis von Gewicht zur Leitung ist nicht befriedigend.

Die Aufgabe der Erfindung besteht nun darin, eine elektrisch betriebene Antriebsvorrichtung für Linearbewegungen zu schaffen, die bei extrem kleinem Gewicht eine grosse Leistung besitzt, infolge ihres kleinen Massenträgheitsmoments eine sehr geringe Anlaufspannung benötigt und somit einen sehr hohen Wirkungsgrad und die ein festes Verhältnis Drehwinkel/Linearweg aufweist.

Die Lösung dieser Aufgabe wird durch die im Kennzeichen des Patentanspruchs beschriebene Lehre vermittelt.

Durch die Kombination eines Elektromotors mit einem eisenlosen Glockenanker, dessen Ankerwelle als Hohlwelle mit Innengewinde ausgebildet ist, in der die Gewindespindel als Vorschubeinheit unmittelbar läuft, wird bei geringstem Gewicht eine nahezu trägheitslos arbeitende Antriebsvorrichtung für Linearbewegungen geschaffen, die überall dort eingesetzt werden kann, wo die Raumverhältnisse begrenzt sind und wo es darauf ankommt, die erzeugte Motorkraft ohne grosse Reibungsverluste und Schlupf in Linearbewegungen umzusetzen.

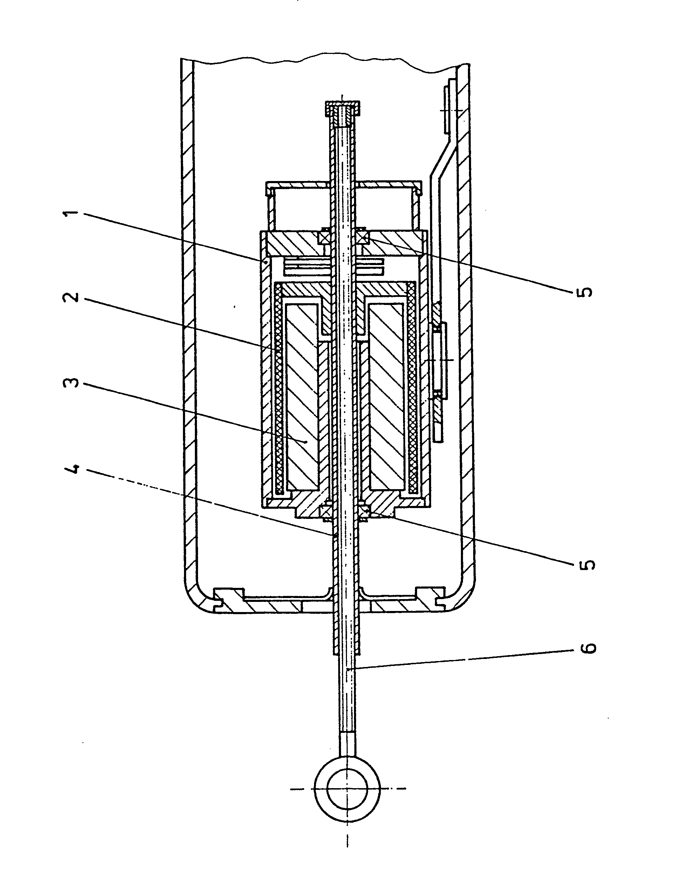

Die Zeichnung beschreibt eine Ausführungsform einer erfindungsgemässen Antriebsvorrichtung für Linearbewegungen.

Im Gehäuse 1 des Motors läuft der Anker 2 mit einem Dauermagneten 3 mit Wicklung auf einer als Hohlwelle 4 mit Innengewinde ausgebildeten Welle auf den Kugellagern 5. Beim Drehen der Hohlwelle 4 erfährt die darin angeordnete Gewindespindel 6 je nach Drehrichtung einen Schub in axialer Richtung nach vorn oder in rückwärtiger Richtung, so dass die rotierende Bewegung des Motors auf kürzestem Wege in eine Linearbewegung umgesetzt wird.

## Patentanspruch

Elektrisch betriebene Antriebsvorrichtung für Linearbewegungen, bestehend aus einem Elektromotor, dessen Welle als Hohlwelle (4) mit Innengewinde ausgebildet ist, und einer in der Hohlwelle liegenden Gewindespindel (6), die bei Drehung der Hohlwelle in axialer Richtung bewegt wird, dadurch gekennzeichnet, dass der Elektromotor aus einem Glockenankermotor besteht und die Gewindespindel in Relation zur antreibenden Hohlwelle (4), feststehend oder mit anderer Drehzahl und/oder anderer Drehrichtung, bewegbar ist.

## Claim

Electrically operated drive device, for linear movements, consisting of an electrical motor, the shaft of which is constructed as hollow shaft (4) with internal thread, and of a threaded spindle (6), which lies in the hollow shaft and is moved in axial direction on rotation of the hollow shaft, characterised thereby, that the electrical motor consists of a bell armature motor and the threaded spindle (6) is movable in relation to the driving hollow shaft (4) either stationarily or at different rotational speed and/or in different direction of rotation.

## Revendication

Dispositif d'entraînement mû électriquement pour déplacements linéaires, constitué d'un moteur électrique dont l'arbre est réalisé sous la forme d'un arbre creux (4) comportant un filetage intérieur, et d'une broche filetée (6) placée dans cet arbre creux, et qui se déplace dans le sens axial sous l'effet de la rotation de l'arbre creux, dispositif caractérisé en ce que le moteur électrique est constitué par un moteur à induit en cloche, et que la broche filetée est mobile en relation avec l'arbre creux (4) qui l'entraîne, fixement ou avec une autre vitesse de rotation et/ou un autre sens de rotation.

3